# EUROPEAN PATENT APPLICATION

(11) **EP 1 968 068 A2**
(43) Date of publication of application: **10.09.2008**
(21) Application number: 08157600.1
(22) Date of filing: 19.02.2005
(51) Int. Cl.: G11B 27/10, G11B 27/32, H04N 5/783

(54) **Information storage medium having recorded thereon text subtitle data synchronized with AV data, and reproducing method and apparatus therefor**

(30) Priority: 21.02.2004 KR 20040011678
(62) Divisional of application: 05726921.9
(71) Applicant: Samsung Electronics Co., Ltd., Suwon-si, Gyeonggi-do 442-742 (KR)
(72) Inventor: Kang, Man-Seok, Gyeonggi-do (KR); Jung, Kil-Soo, Taean-eup, Hwaseong-si, Gyeonggi-do (KR); Park, Sung-Wook, Mapo-gu, Seoul (KR)
(74) Representative: Rooney, John-Paul

(57) **Abstract**

An information storage medium having recorded thereon text subtitle data that is rendered to be output in synchronization with reproduction of audio/video (AV) data, and a method and apparatus for reproducing the text subtitle data and AV data. The information storage medium includes subtitle data that is output in synchronization with AV data and output time information indicating an output beginning time and/or an output ending time of the subtitle data.

## Description

### Technical Field

The present invention relates to subtitles, and, more particularly, to an information storage medium for a recording/reproducing medium including text subtitle data that is rendered to be output in synchronization with audio/video (AV) data. The present invention also relates to a reproducing method and an apparatus to be used with the reproducing method.

### Background Art

In order to display subtitles during a reproduction of audio/video (AV) data, a presentation graphics stream containing subtitle data is rendered into bitmap data and then multiplexed along with a video stream and an audio stream so as to create AV data. Since such bitmap-format subtitle data is multiplexed along with the video stream and the audio stream, the bitmap-format subtitle data may be smoothly reproduced in synchronization with the video stream. However, problems with these techniques are that the size of bitmap-format subtitle data is large, and that there is a limitation on the number of subtitles that may be multiplexed within a maximum bitrate. The maximum bitrate is defined in an application of a specific information storage medium.

In addition to bitmap-format subtitle data, there is also text subtitle data. Text subtitle data is designed to obviate difficulties in creating and editing bitmap-format subtitle data. However, text subtitle data exists separately without being multiplexed along with a video stream. As a result, unlike a presentation graphics stream containing conventional bitmap-format subtitle data, synchronizing text subtitle data with a video stream only using a presentation time stamp (PTS) defined in a header of a packetized elementary stream (PES) packet is difficult. Moreover, when a jump is made to a random position and data at the random position is reproduced, re-synchronizing text subtitle data with a video stream is also difficult.

### Disclosure of Invention

### Technical Solution

The present invention provides an information storage medium of a recording/reproducing apparatus having recorded thereon text subtitle data in which an output beginning time and an output ending time of every subtitle item are designated, and a method and apparatus to reproduce the text subtitle data in synchronization with a video stream during a normal or trick play of the video stream.

### Advantageous Effects

According to aspects of the present invention, reproducing text subtitle data in synchronization with an AV stream is possible during not only a normal play but also a trick play (such as jumps to other portions of the AV stream, still frame, slow motion, fast play).

### Description of Drawings

FIGS. 1A through 1E illustrate a process of multiplexing a video stream, an audio stream, and other streams into a source packet to construct an AV stream and storing the AV stream in an information storage medium according to an aspect of the invention;

FIG. 2 is a schematic block diagram of an apparatus to reproduce an AV stream according to an aspect of the invention;

FIGS. 3A and 3B show input of source packets constituting an AV stream stored in the information storage medium to the apparatus to reproduce an AV stream according to an aspect of the invention;

FIGS. 4A through 4C are views showing changes in a system time clock (STC) of the apparatus for reproducing an AV stream when source packets having one arrival time clock (ATC)-sequence are input to the apparatus to reproduce an AV stream according to an aspect of the invention ;

FIG. 5 shows the relationship between navigation information to designate a reproduction order and a reproduction position of an AV stream stored in the information storage medium and the AV stream according to an aspect of the invention ;

FIGS. 6A and 6B are views to explain the problem of text subtitle data according to an aspect of the invention ;

FIGS. 7A and 7B illustrate addition of reference playitem information in which subtitles should be displayed as a method of reproducing subtitles according to an aspect of the invention ;

FIGS. 8A and 8B illustrate recording of text subtitles by assigning a presentation time stamp (PTS) based on a global time as a second method of reproducing subtitles according to an aspect of invention ;

FIG. 9 shows the relationship between time information indicated by each playitem and the global time of a playlist according to an aspect of the invention ; and

FIG. 10 is a schematic block diagram of an apparatus to reproduce text subtitle data and AV data according to an aspect of the invention.

### Best Mode

According to one aspect of the present invention, an information storage medium of a recording/reproducing apparatus comprises subtitle data that is output in synchronization with audio/video (AV) data and output time information indicating an output beginning time and/or an output ending time of the subtitle data.

According to an aspect of the invention, information storage medium may further comprise playitem information indicating the AV data with which output of the subtitle data should be synchronized.

According to another aspect of the invention, the output time information may be created by referring to a system time clock (STC) of the playitem information.

According to another aspect of the invention, the output time information may be created by referring to global time information included in a playlist indicating the AV data with which output of the subtitle data should be synchronized.

According to another aspect of the present invention, a method to reproduce text subtitle data and AV data includes reading output time information indicating an output beginning time and/or an output ending time of subtitle data that is output in synchronization with AV data and outputting the subtitle data according to the output time information. In the outputting of the subtitle data, information indicating the AV data with which output of the subtitle data should be synchronized may be further read.

According to still another aspect of the present invention, an apparatus to reproduce AV data and text subtitle data comprises an AV data processing unit, an output time information extracting unit, and a subtitle output unit. The AV data processing unit displays the AV data. The output time information extracting unit reads output time information indicating an output beginning time and/or an output ending time of subtitle data that is output in synchronization with the AV data. The subtitle output unit reads the subtitle data according to the output time information and outputs the read subtitle data in synchronization with the AV data.

According to an aspect of the invention, the output time information extracting unit may further read information indicating the AV data with which output of the subtitle data should be synchronized.

### Mode for Invention

Reference will now be made in detail to the present embodiments of the present invention, examples of which are illustrated in the accompanying drawings, wherein like reference numerals refer to the like elements throughout. The embodiments are described below in order to explain the present invention by referring to the figures.

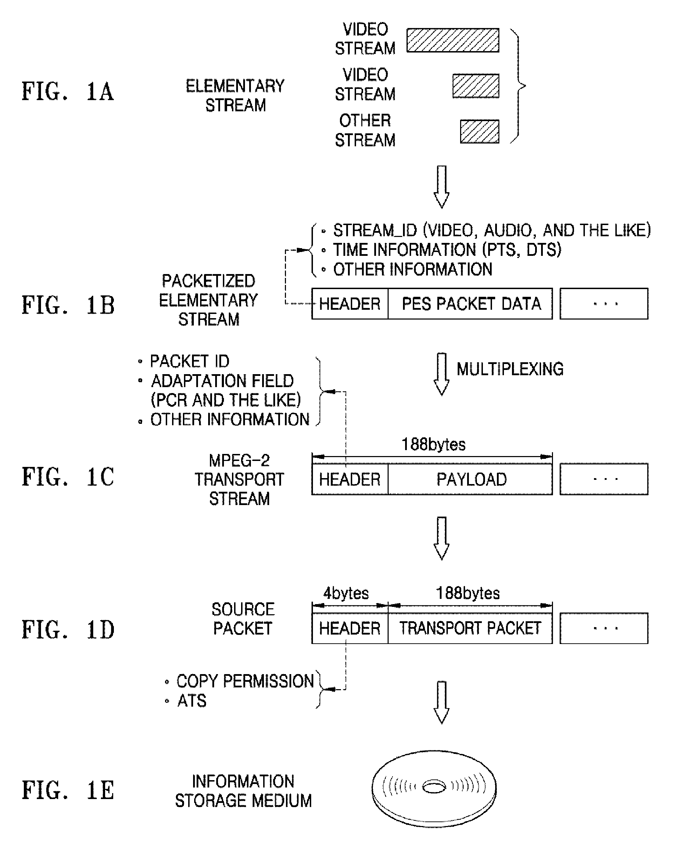

FIGS. 1A through 1E show a process of multiplexing a video stream, an audio stream, and other streams into a source packet to construct an audio/visual (AV) stream and storing the AV stream in an information storage medium according to an aspect of the invention. Referring to FIG. 1A, an AV stream includes at least a video stream, an audio stream, a presentation graphics stream containing bitmap-format subtitle data. The AV stream may also include other data streams manufactured by a manufacturer for specific use. Each data stream, such as a video stream, an audio stream, or other data stream, is referred to as an elementary stream. Such an elementary stream is packetized into a packetized elementary stream (PES) shown in FIG. 1B.

Each PES comprises a PES header and PES packet data. In the PES header, stream_ID information is recorded so as to identify the type of a PES packet data among video data, audio data, and other data, time information such as a decoding time stamp (DTS) and a presentation time stamp (PTS) of a PES packet, and other information.

Such a video PES, an audio PES, and PESs of other data are multiplexed to construct a MPEG(Moving Picture Expert Group)-2 transport stream (TS) packet of 188 bytes shown in FIG. 1C. The MPEG-2 TS packet of 188 bytes comprises an MPEG-2 TS header in which information about payload data is recorded. The MPEG-2 TS header includes packet ID information indicating the type of payload data, an adaptation field which includes a program clock reference (PCR) to set a system time clock (STC) of an apparatus to reproduce an AV stream, and other information. The STC is a reference time for a DTS and a PTS used to decode and output a PES packet.

A header of 4 bytes is added to the MPEG-2 TS packet of 188 bytes to construct a source packet as shown in FIG. 1D, and a group of those source packets constitute an AV stream. A header of a source packet includes copy permission information containing content protection information to prevent illegal copying of the source packet and an arrival time stamp (ATS) indicating a time at which the source packet arrives in the apparatus to reproduce an AV stream. The constructed AV stream is recorded in the information storage medium shown in FIG. 1E. It is understood that the information storage medium can be optical (such as CD, DVD, Blu-ray), magnetic (such as DVR, flash memory, hard drive), magneto-optical, or other media.

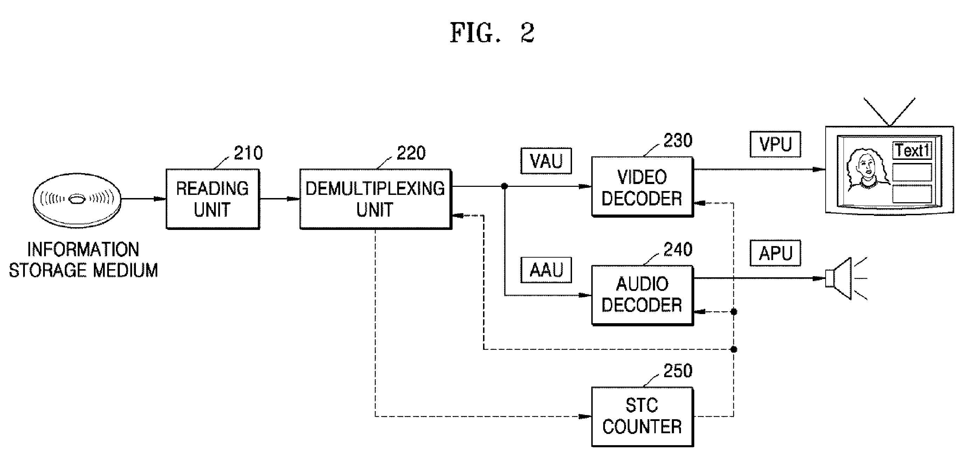

FIG. 2 is a schematic block diagram of an apparatus to reproduce an AV stream according to an aspect of the invention. As shown in FIG. 2, reading unit 210 reads an AV stream constructed as described above with reference to FIG. 1 from an information storage medium on which the AV stream is recorded. Also, the reading unit 210 transmits a source packet to a demultiplexing unit 220 according to an ATS recorded in the header of the source packet. The demultiplexing unit 220 removes the header from the received source packet to reconstruct an MPEG-2 TS packet. In case the MPEG-2 TS packet includes PCR information in a header thereof, the demultiplexing unit 220 sets an STC counter 250 of the apparatus to reproduce an AV stream based on the PCR information and classifies the MPEG-2 TS packet into one for a video stream, an audio stream, or other data stream based on packet ID information so as to reconstruct a PES packet of a corresponding data stream. The STC counter 250 continuously increases by counting a system clock and is then occasionally reset to a value that does not gradually increase according to a PCR but, rather, is indicated by a PCR. It is understood that the apparatus may further record data, and that the reading unit need not be included in all aspects so long as the transport stream is received by the apparatus.

A PES packet reconstructed in this way is transmitted to a video decoder 230 and an audio decoder 240 when a DTS included in the header of the PES packet and the STC counter 250 of the apparatus to reproduce an AV stream are identical. Decoded video data or decoded audio data is output when a PTS and the value of the STC counter 250 are identical. At this time, the unit of a video stream output at a specific time point is referred to as a video presentation unit (VPU) and the unit of an audio stream output at a specific time point is referred to as an audio presentation unit (APU). Also, the unit of a video stream containing data that is to be decoded by the video decoder 230 to create a VPU is referred to as a video access unit (VAU) and the unit of an audio stream containing data that is to be decoded by the audio decoder 240 to create an APU is referred to as an audio access unit (AAU).

In other words, a source packet recorded on the information storage medium is demultiplexed into a VAU and an AAU each of which is to be decoded at a specific time. The VAU and the AAU are then transmitted to the video decoder 230 and the audio decoder 240 when a DTS recorded in a corresponding access unit and the value of the STC counter 250 are substantially identical. Thus, a VPU and an APU are created. The created VPU and APU are output when a PTS of a corresponding presentation unit and the value of the STC counter 250 are identical. The PTS of an audio stream may denote a time when the AAU is input to or output from the audio decoder 240. While not required in all aspects, the VAU and/or AAU may be buffered so as to synchronize the VAU and the AAU with the STC counter.

Like a video stream or an audio stream, a presentation graphics stream for bitmap-format subtitle data is also rendered into an access unit and a presentation unit, and DTS and PTS of each unit operate in synchronization with the STC counter 250. The synchronous operation of the DTS and the PTS with the STC counter achieves reproduction synchronization between the presentation graphics stream and bitmap-format subtitle data.

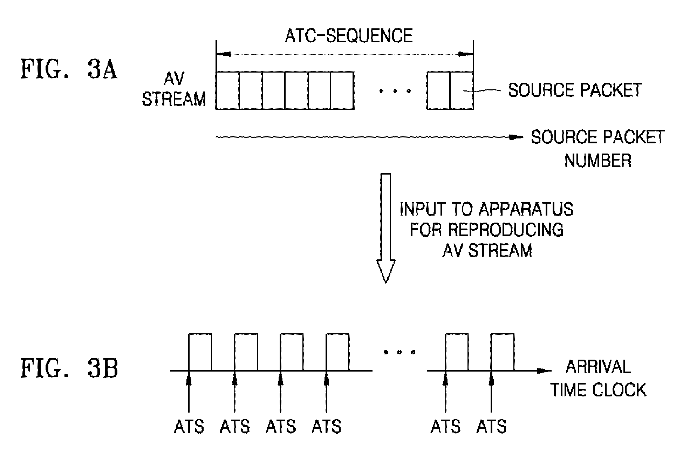

FIGS. 3A and 3B show input of source packets constituting an AV stream stored in the information storage medium to the apparatus to reproduce an AV stream. Referring to FIG. 3A, the AV stream is composed of source packets. ATS information, which is time information about a time when each source packet is input to the apparatus to reproduce an AV stream, is included in the header of each source packet. Also, an arrival time clock (ATC) counter of the apparatus to reproduce an AV stream is reset to the ATS of a source packet that is first input to the apparatus to reproduce an AV stream as shown in FIG. 3B. An ATS included in the header of a source packet that is input after the first input source packet is compared with a count of the ATC counter and the source packet is input to the apparatus to reproduce an AV stream at a time point where the ATS of the source packet and the count of the ATC counter are identical. At this time, if ATSs of source packets are connected without discontinuity, these source packets have the same ATC-sequence. In general, one AV stream is composed of one ATC-sequence, but multiple ATS-sequences are possible.

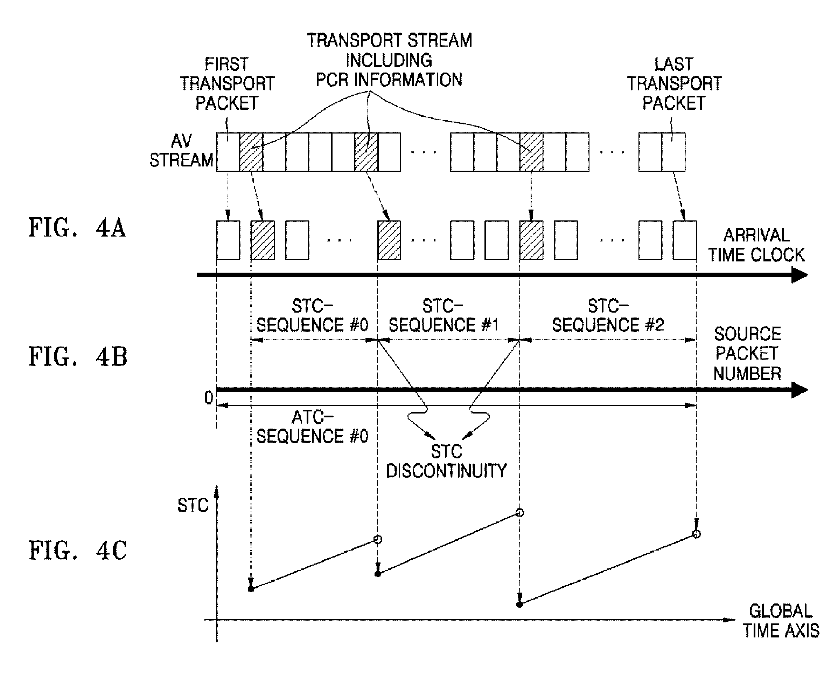

FIGS. 4A through 4C show changes in the STC of the apparatus to reproduce an AV stream when source packets having one ATC-sequence are input to the apparatus to reproduce an AV stream. Referring to FIG. 4A, source packets included in one ATC-sequence are sequentially input to the apparatus to reproduce an AV stream according to their ATSs and are then reconstructed into MPEG-2 TS packets. At this time, if PCR information is included in the header of an MPEG-2 TS packet, the apparatus to reproduce an AV stream resets an STC thereof using the PCR information as shown in FIGS. 4B and 4C. An STC-sequence indicates a sequence of MPEG-2 TS packets controlled by the STC that continuously increases by PCR information included in the header of an MPEG-2 TS packet.

At least one STC-sequence is included in one ATC-sequence. In this case, PCR information to reset an STC should be recorded when a STC-sequence changes into another, i.e., when a discontinuity of the STC occurs in the first MPEG-2 TS packet of a new STC-sequence.

Referring to FIGS. 4A through 4C, when an AV stream having one ATC-sequence is reproduced, a global time using 0 as a beginning point of reproduction of the AV stream gradually increases, whereas STC-sequences of #0, #1, and #2 have different STC values.

In the case of a video stream, an audio stream, and a presentation graphics stream, even though discontinuity occurs in an STC-sequence and the STC is reset, since they are multiplexed into one AV stream, DTS and PTS of each data stream may be processed by an STC in an STC-sequence that controls corresponding time information. However, text subtitle data is not included in a specific STC-sequence because text subtitle data exists separately from an AV stream or because a plurality of ATC-sequences may exist due to the fact that the text subtitle data may be stored over a plurality of AV streams. As a result, the text subtitle data cannot have an output beginning time and an output ending time using a PTS based on an STC.

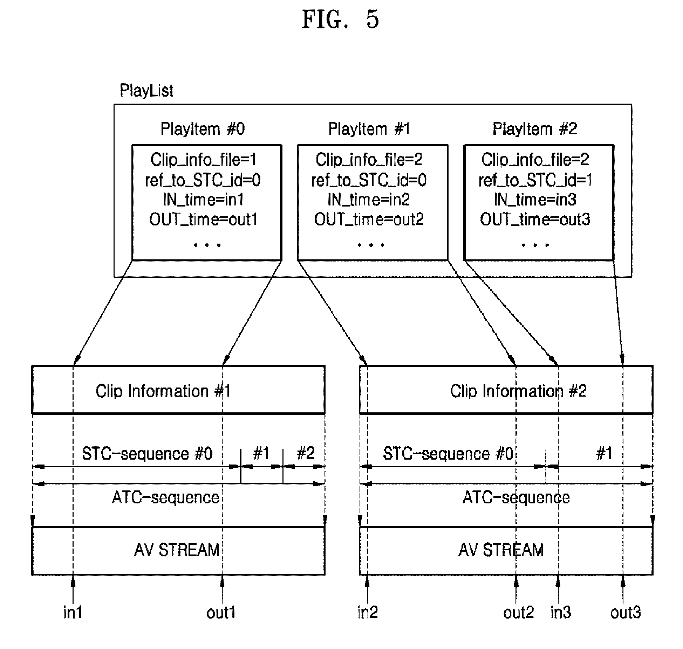

FIG. 5 shows the relationship between navigation information to designate a reproduction order and a reproduction position of an AV stream stored in the information storage medium and the AV stream. Referring to FIG. 5, the AV stream, clip information including attribute information about the AV stream, and navigation information indicating a reproduction order of the AV stream are included in the information storage medium. The navigation information includes title information about at least one title included in the information storage medium and at least one playlist including a reproduction order of AV streams that are reproduced according to each title.

Referring to FIG. 5, a playlist includes at least one playitem including reference information indicating an AV stream to be reproduced. The playitem includes clip_info_file indicating the clip information including attribute information about the AV stream to be reproduced, ref_to_STC_id indicating a number of an STC-sequence including an STC of an AV stream indicated by a playitem in the AV stream, and IN_time and OUT_time information indicating the beginning and end of a playitem in an STC-sequence indicated by the playitem.

Hereinafter, a description will be made about a process of reproducing an AV stream from the information storage having a data structure as described above. A playlist indicated by a title to be reproduced is selected, and if playitems included in the selected playlist are subject to normal play. The playitems are sequentially selected from the top. If, on the other hand, the playitems included in the selected playlist are subject to random accesses, they are sequentially selected from a designated playitem.

If a playitem #0 is first selected, clip information #1 is selected based on the Clip_info_file=1 information included in the playitem #0. An STC-sequence #0 is selected in an ATC-sequence of an AV stream indicated by the clip information #1 based on the ref_to_STC_id=0 information included in the playitem #0. The AV stream is reproduced from an in1 position to an out1 position that are indicated by an STC corresponding to the STC-sequence #0 based on the IN_time=in1 and OUT_time=out1 information included in the playitem.

Next, if a playitem #1 is selected, clip information #2 is selected based on the Clip_info_file=2 information included in the playitem #1. The STC-sequence #0 is selected in an ATC-sequence of an AV stream indicated by the clip information #2 based on the ref to STC id=0 information included in the playitem #1. The AV stream is reproduced from an in2 position to an out2 position that are indicated by an STC corresponding to the STC-sequence #0 based on the IN_time=in2 and OUT_time=out2 included in the playitem #1. It is therefore understood that any next playitems, such as playitem #3 are to be reproduced in the same way.

In other words, a playlist is selected and a playitem is selected from the selected playlist to search for a position of an AV stream to be reproduced. After an AV stream from the found position is transmitted to the apparatus to reproduce an AV stream according to the ATS, the STC of the apparatus to reproduce an AV stream is reset using an MPEG-2 TS packet including PCR information among transmitted data. A VAU and an AAU start to be decoded at a time point where a PTS included in each access unit and the STC are identical. The decoding of the VAU and the AAU at this time point creates a VPU and an APU. The created VPU and APU are output when a PTS of each presentation unit and the STC are identical.

Also, in order for the apparatus to reproduce an AV stream to display subtitles corresponding to video data, text subtitle data defines an output beginning time and an output ending time (begin, end) to output each subtitle item defined in the text subtitle data. At this time, when a PTS based on an STC in a video stream and an audio stream in an AV stream is used as attribute information of the output beginning time and the output ending time (begin, end) of each subtitle item that are defined in the text subtitle data, an output beginning time and an output ending time (begin, end) in a subtitle item that are sequentially defined do not continuously increase and specific time ranges overlap. Here, it is understood that the sequential definition of the output beginning time and the output ending time are in accordance with a reproduction order in one text subtitle. As a result, an ordering relationship between subtitle items cannot be identified.

Also, the same output beginning time and output ending time (begin, end) may be used between different subtitle items. Thus, when a playlist is selected and reproduced, if a jump is made to a random position and data at the random position is reproduced, instead of normal sequential reproduction, accurately searching for a subtitle item located at the same position as a video stream may be substantially impossible.

Hereinafter, a method to solve the above-described problem of text subtitle data will be described. Text subtitle data manufactured in the form of a markup language is taken as an example to structurize text subtitle data in an aspect of the present invention, but text subtitle data may have a binary form structure according to other aspects of the invention. The binary form structure is obtained by giving a meaning to every specific byte of a sequence of binary data so as to structurize the text subtitle data. In other words, the text subtitle data is structurized such that first several bytes indicate information about a subtitle item 1 and next several bytes indicate information about a subtitle item 2. However, it is understood that the text subtitle data could be structurized in additional alternate methods.

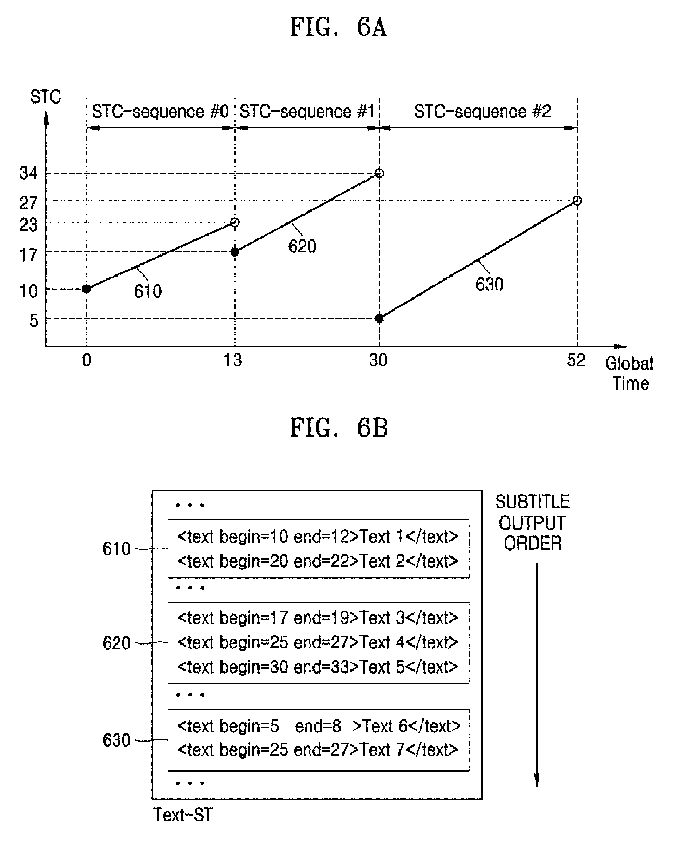

FIGS. 6A and 6B are views to explain the problem of text subtitle data. Referring to FIGS. 6A and 6B, subtitle items of a subtitle 610 correspond to an STC-sequence #0, in which (begin, end) of a subtitle "Text 1" is (10, 12) and (begin, end) of a subtitle "Text 2" is (20, 22). Subtitle items of a subtitle 620 correspond to an STC-sequence #1, in which (begin, end) of a subtitle "Text 3" is (17, 19), (begin, end) of a subtitle "Text 4" is (25, 27), and (begin, end) of a subtitle "Text 5" is (30, 33). Subtitle items of a subtitle 630 correspond to an STC-sequence #2, in which (begin, end) of a subtitle "Text 6" is (5, 8) and (begin, end) of a subtitle "Text 7" is (25, 27).

In the case of a normal play, an output order of each subtitle is 610, 620, then 630, but (begin, end) of each subtitle item is not maintained as a constant. As a result, an ordering relationship between subtitles cannot be identified only using (begin, end) information. Also, the subtitle "Text 4" and the subtitle "Text 7" have the same (begin, end). The text subtitle data constructed in this way should be output in synchronization with video data. If a normal play from the first playitem of a video stream is not made, but a jump is made to a position corresponding to a time "25" of the STC-sequence #2 during reproduction of the video stream and reproduction is made, a decoder that processes text subtitle data cannot determine which one of the subtitles "Text 4" and "Text 7" is a subtitle item corresponding to a position of current video data.

Thus, to output each subtitle item defined in text subtitle data in synchronization with a video stream, the following two methods are used:

(1) Each subtitle item further includes reference playitem information along with which a corresponding subtitle item is displayed, and a PTS created based on an STC is assigned as (begin, end).

(2) A PTS created based on a global time of a playlist including at least one AV stream with which reproduction of corresponding subtitle data should be synchronized is assigned to an output beginning time and an output ending time (begin, end) of each subtitle item.

In both methods, one of output beginning time information (begin) and output ending time information (end) may be included, instead of including both of them as time information.

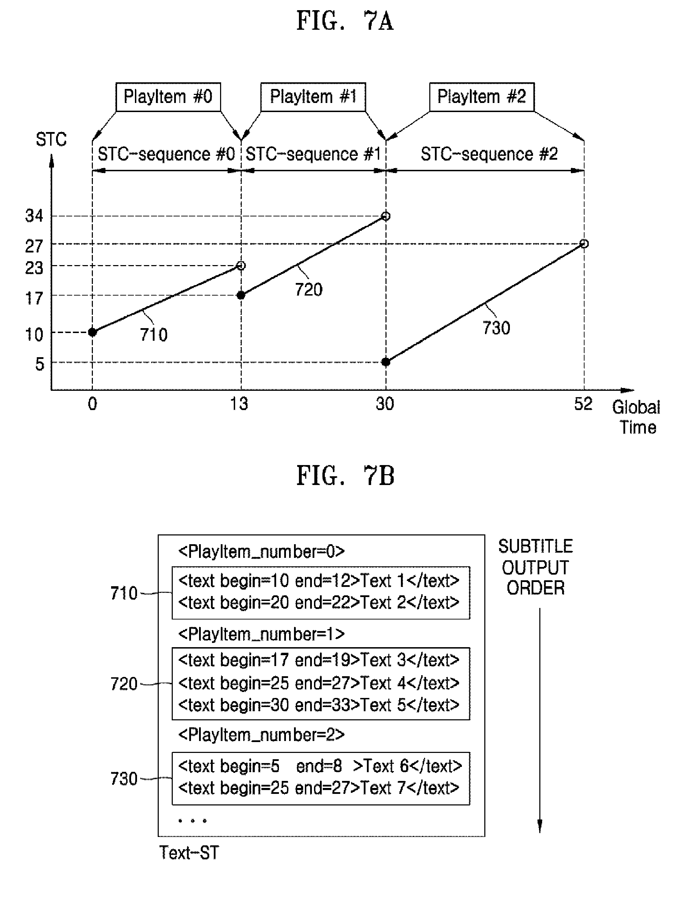

FIGS. 7A and 7B show addition of reference playitem information in which subtitles should be displayed as a method of reproducing subtitles according to an aspect of the invention. Referring to FIGS. 7A and 7B, subtitle items of a subtitle 710 are included in an STC-sequence #0 and the STC-sequence #0 is indicated by the playitem #0. Subtitle items of a subtitle 720 are included in an STC-sequence #1 and the STC-sequence #1 is indicated by the playitem #1. Also, subtitle items of a subtitle 730 are included in an STC-sequence #2 and the STC-sequence #2 is indicated by the playItem #2. A PTS created based on the STC is used as (begin, end) of each subtitle item.

In this case, the subtitle items of the subtitle 710 designate a number of a playitem in which the subtitle items of the subtitle 710 are used using additional information < PlayItem_number = 0>. Thus, PTSs used as (begin, end) by the subtitle items of the subtitle 710 are created based on an STC according to the STC-sequence #0 indicated by the playitem #0 and should be controlled according to the STC.

Similarly, the subtitle items of the subtitle 720 and the subtitle items of the subtitle 730 designate numbers of playitems in which the subtitle items of the subtitles 720 and 730 are used using additional information <PlayItem_number = 1> and < PlayItem_number = 2>, thereby solving the problem described with reference to FIG. 6. Also, reference playitem information included in text subtitle data may be separately included in each subtitle item.

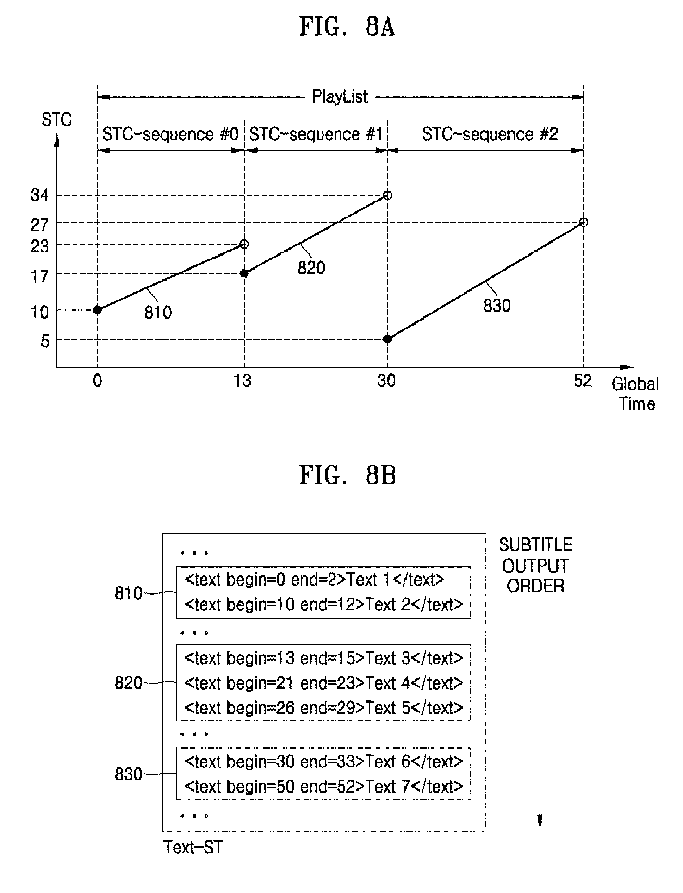

FIGS. 8A and 8B show recording of text subtitles by assigning a PTS based on a global time as a second method of reproducing subtitles according to an aspect of the invention. According to FIGS. 8A and 8B, a separate memory space that records a global time to store a running time of an AV stream is assigned to the apparatus to reproduce an AV stream from the information storage medium according to the present invention. As such, the apparatus to reproduce an AV stream has a player status register (PSR) as a space to store information required for reproduction, and a register that stores a global time is set to 0 when a playlist is selected to reproduce an AV stream and sequentially increases as reproduction of an AV stream indicated by a playlist is progressed. In other words, the register is set to 0 at the IN_time of the first playitem of the selected playlist and sequentially increases until the OUT_time of a corresponding playitem. Once a next playitem is selected, the global time stored in the register sequentially increases from the IN_time of a corresponding playitem.

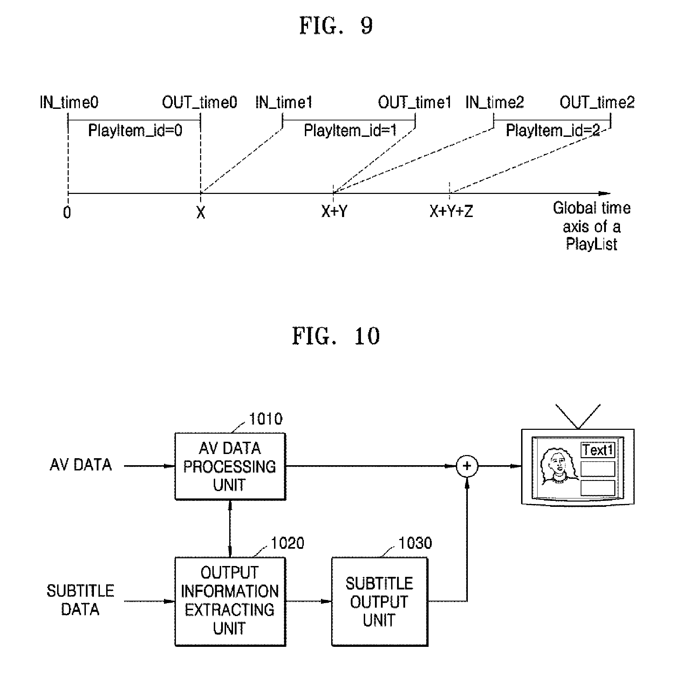

FIG. 9 shows a relationship between time information indicated by each playitem and the global time of a playlist. Referring to FIG. 9, X denotes an interval for reproduction of a playitem indicated by PlayItem_id=0, Y denotes an interval for reproduction of a playitem indicated by PlayItem_id=1, and Z denotes an interval for reproduction of a playitem indicated by PlayItem_id=2. In other words, time information on a global time axis included in a playlist is matched one-to-one with a time in a specific STC-sequence in a specific ATC-sequence included in each playitem.

Thus, as described with reference to FIGS. 8A and 8B, each item of text subtitle data indicates a PTS using time information on the global time axis as an output beginning time and an output ending time of a corresponding subtitle item so as to smoothly reproduce an AV stream by referring to the register that stores the global time of a current reproduction time point during synchronization and resynchronization with the AV stream.

FIG. 10 is a schematic block diagram of an apparatus for reproducing text subtitle data and AV data according to the present invention. Referring to FIG. 10, an AV data processing unit 1010 reads AV data stored in an information storage medium and outputs the read AV data. An output time information extracting unit 1020 reads output time information indicating an output beginning time and an output ending time of subtitle data that is output in synchronization with AV data. The output beginning time and the output ending time are expressed with (begin, end) as described above, each of which is created by referring to an STC of a playitem. Also, the output time information may include one of the output beginning time and the output ending time or both of them. In this case, playitem information indicating AV data with which output of the subtitle data should be synchronized is further read to determine a playitem having an STC with which output of the subtitle data should be synchronized. Also, as described above, the output time information is created by referring to the global time of a playlist indicating AV data with which output of the subtitle data should be synchronized. A subtitle output unit 1030 reads subtitle data according to output time information and outputs the read subtitle data in synchronization with AV data.

The method to reproduce text subtitle data and AV data may also be embodied as a computer program. Codes and code segments forming the computer program may be easily construed by computer programmers skilled in the art. Also, the computer program is stored in computer-readable media and read and executed by a computer, thereby implementing the method for reproducing text-based subtitle data and AV data. Examples of the computer-readable media include magnetic tapes, optical data storage devices, and carrier waves.

Although a few embodiments of the present invention have been shown and described, it would be appreciated by those skilled in the art that changes may be made in these embodiments without departing from the principles and spirit of the invention, the scope of which is defined in the claims and their equivalents.

## Claims

1. A method of reproducing audio/video (AV) data and text subtitle data, the method comprising:
resetting a first STC using a value, which is used to reset the first STC, which is included in audio/video (AV) stream;
reproducing the AV data using the first STC which is reset by the value; and
reproducing the text subtitle data using a second STC which is different from the first STC.

2. The method of claim 1, wherein the value used to reset the first STC is program clock reference (PCR) and the second STC is not reset by the PCR.

3. The method of claim 1, further comprising:
reading output time information indicating an output beginning time and/or an output ending time of the text subtitle data that is output to be in synchronization with the audio/video (AV) data; and
outputting the text subtitle data according to the output time information synchronized with the corresponding AV data.

4. The method of claim 3, wherein the outputting of the subtitle data further comprises reading information indicating the AV data, with which output of the subtitle data is to be synchronized.

5. The method of claim 4, wherein the information indicating the AV data comprises playitem information.

6. The method of claim 5, wherein the output time information refers to a system time clock (STC) of the playitem information.

7. The method of claim 3, wherein the output time information refers to time information included in a playlist indicating the AV data with which output of the subtitle data should be synchronized.

8. The method of claim 7, wherein the time information included in the playlist is a global time of the playlist.
